# EUROPEAN PATENT SPECIFICATION

(11) **EP 0 312 420 B1**
(45) Date of publication and mention of the grant of the patent: **18.08.1993**
(21) Application number: 88402446.4
(22) Date of filing: 28.09.1988
(51) Int. Cl.: A23L 1/24

(54) **Sauce having flavor like mayonnaise sauce and the method of the production thereof**
Sauce mit einem Aroma wie Mayonnaisesauce und Verfahren zur Herstellung derselben
Sauce avec un arôme semblable à celui de la sauce mayonnaise et sa méthode de préparation

(30) Priority: 30.09.1987 JP 245990/87
(43) Date of publication of application: 19.04.1989
(73) Proprietor: TOKINO KABUSHIKI KAISHA, Tokyo (JP)
(72) Inventor: Suzuki, Sonoko, Minato-ku Tokyo (JP)
(74) Representative: Viard, Jean

(56) References cited:
- DE-A- 1 517 113
- DE-C- 175 334
- GB-A- 1 233 043
- US-A- 3 728 133
- Hess , Wiener Küche 1962 p 176,177,179,180,183,181 Lebensmittellexicon p 786

## Description

### FIELD OF THE INVENTION

The present invention relates to new sauce having a flavor like mayonnaise sauce, that is mayonnaise-like products with normal mayonnaise characteristics, such as mayonnaise-like flavor, but being produced without using oils and fats as main raw material and a method of the preparation thereof. Furthermore, the present invention relates to oilless and fatless mayonnaise sauce, and a method of the preparation thereof, particularly to mayonnaise-like sauce of low-caloric-type and a method of the preparation thereof.

### BACKGROUND OF THE INVENTION

The usual mayonnaise sauce is semi-solid emulsions of edible oils, an egg material such as egg-yolk, flavoring agents such as vinegar and water, and the mayonnaise sauce is being used in plenty with the progress of rendering dietary life in European fashion, for example as it is used as sauce of salad.

However, the compositions of the mayonnaise sauce contains edible oils as main raw material, and the mixing ratio thereof, though it changes depending on a kind of mayonnaise sauce, is about 70% or thereabove, and therefore the mayonnaise sauce is very high in caloric value, for example mayonnaise sauce of egg-type has 698kcal per 100g, mayonnaise sauce of egg yolk has 666Kcal per 100g. Accordingly, for example in case of a man being reducing weight for health and the like, use of mayonnaise sauce will be withheld. However the mayonnaise sauce is seasoning which is fit for eating fresh vegetables, while eating of fresh vegetables is indispensable for taking vitamins and the like. Therefore, the development of mayonnaise sauce of low-caloric type is expected.

### SUMMARY OF THE INVENTION

An object of the present invention is to provide mayonnaise-like sauce of low-caloric type having a flavor like of the mayonnaise sauce and a process for producing such a sauce.

According to the present invention, a mayonnaise-like sauce prepared with ingredients consisting of vinegar, condiment, salt, water and egge, is characterized in that the thermally coagulated egg is dispersed in a heated, stirred mixture to form a sauce having a flavor similar to mayonnaise and in that said sauce is in a semisolid state with a fluidity equivalent to mayonnaise.

In the present invention, as egg, raw egg and/or egg yolk can be used. In the present invention, as to vinegar used, in the same manner as in the usual mayonnaise sauce, synthetic vinegar, brewed vinegar or mixture thereof can be used , however grain vinegar can be preferably used for flavor. However, lemon juice and/or citric acid can be used complementarily with vinegar selected from the group consisting of rice vinegar, malt vinegar, sake lees vinegar, and fruits vinegar. The first standard of the amount of vinegar can be set up to about 90ml per egg yolks of five eggs, however, of course, the amount of vinegar can be suitably increased or decreased from the standard value. In case of using raw egg as egg, egg white functions also as medium. Therefore, in case of using egg yolk as egg, water is used in place of egg white. In this case, water of 30ml to 50ml per one egg yolk can be preferably used. The amounts of salt and condiment can be selected depending on flavor of the sauce according to the present invention. The standard of the amount of salt can be set up to one and a half teaspoonfuls, for example, 7.5ml, and this amount can be increased or decreased from the standard value. As condiment, in the same manner as in the usual mayonnaise sauce, for example, mustard, white pepper, paprika powder, or the like can be suitably used. In the present invention, seasonings can be suitably added besides these ingredients.

According to the present invention, a mixture of egg, vinegar, salt, condiment, water and others is heated under stirring to a temperature of 60°C or thereabove, preferably of from 90°C to 100°C. Herein, to set a temperature of 60°C or thereabove is necessary for thermal-coagulating egg, thus egg being thermal-coagulated and disperesed so that the resulting mixture presents the mayonnaise-like state, that is, the semisolid state.

The sauce according to the present invention is prepared by heating a mixture of egg, vinegar, salt, condiment, water and others under stirring of said mixture to a temperature of 60°C or thereabove so as to thermal-coagulate the egg and disperse the resulting thermal- coagulated egg so that the resulting mixture presents the mayonnaiselike state, that is, the semisolid state.

The sauce according to the present invention having thermal-coagulated egg dispersed in a mixture containing vinegar, salt, condiment, water and others shows a semisolid state, and bears resemblance to the usual mayonnaise sauce in flavor and the like. However, even if granted that lipoid is contained in the sauce according to the present invention, it is a little, and the sauce according to the present invention is relatively low in calorific value. Therefore, food which is similar to mayonnaise sauce with low calorific value can be prepared.

The sauce according to the present invention can be applied to a dish in which mayonnaise sauce is used, for example, such as potato salad, macaroni salad, sandwitches, tartar sauce, golden baked food, in place of total amount or a part of the usual mayonnaise sauce, with the same amount as the usual mayonnaise sauce.

Because the sauce according to the present invention is made from raw material containing egg, vinegar, condiment, salt, water and others and the sauce having flavor like mayonnaise sauce can be obtained without using oils and fats as main raw material, a substitute for the usual mayonnaise sauce can be prepared. Therefore, because the sauce according to the present invention can be used in place of the usual mayonnaise sauce with a view to cooking mayonnaise dishes, mayonnaise dishes which contain lower level of oils and fats as compared with the usual ones and thereby are low in calorific value can be prepared.

### DESCRIPTION OF THE PREFERRED EMBODIMENT

Examples of the specific forms according to the present invention will be explained below. However, the present invention need not necessarily be limited to the following description and exemplication.

### Example 1

Four egg yolks (about 80g) and a raw egg (about 55g) are contained in a vessel, and a solution of 90ml of vinegar in 200ml of water is added little by little to them under stirring and mixed with them. After the uniform mixture has been gained, salt, pepper, and other seasonings such as curry powder, garlic powder, soy sauce and the like is suitably added thereto.

The mixture is heated to a temperature of 60°C or thereabove, for example by a water bath heated to a temperature of about 90°C to 100°C. As the heating proceeds, thermal-coagulating of egg proceeds so that the mixture becomes cloudy or opaque. Nevertheless the heating is continued under stirring of said mixture by a whisk for cooking and the like. For instance, in case of the stirring being herein carried out by a mixer, the number of rotations is preferably about 60rpm.

This heating is continued for about 9 minutes, whereby about 340g of sauce having "toromi", that is, the creaminess and presenting flavor like mayonnaise sauce can be obtained.

This obtained sauce having flavor like mayonnaise sauce can be preserved in cold storage or refrigeration. In case of cold storage having been carried out for a week or thereover, or in case of frozen sauce being thawed, liquid will be separated. However if the sauce is merely heated by a water bath and the like, under stirring, it becomes uniform again so that sauce showing the creaminess is regenerated.

### Example 2

Under the same condition as the manufacturing condition in Example 1 except that a part of water was substituted for egg white and time of heating was shortened than in Example 1, sauce was prepared. Obtained sauce showing flavor like mayonnaise sauce was thickner than one obtained in Example 1 and more mayonnaise-like.

### Example 3

Under the same condition as the preparing condition in Example 1 except that time of heating was lengthened than in Example 1, sauce was prepared. Obtained sauce presenting flavor like mayonnaise sauce was thickner than one obtained in Example 1 and more mayonnaise-like.

### Example 4

Five raw eggs (about 275g) are contained in a vessel, and a solution of vinegar 90ml in water 50ml is little by little added to them under stirring and mixed with them. After the uniform mixture has been gained, salt, pepper, and other seasonings such as curry powder, garlic powder, soy sauce and the like are suitably added thereto.

The mixture is heated to a temperature of 60°C or thereabove, for example by a water bath heated to a temperature of about 90°C to 100°C and the like. As the heating proceeds, thermal-coagulating of egg proceeds so that the mixture becomes cloudy. Nevertherless the heating is continued under stirring by a whisk for cooking and the like. Herein, for instance in case of the stirring being carried out by a mixer, the number of rotations is preferably for example about 180rpm.

This heating is continued for about 4 minutes, whereby about 340ml of sauce having the creaminess and having flavor like mayonnaise sauce can be obtained.

## Claims

1. A mayonnaise-like sauce prepared with ingredients consisting of vinegar, condiment, salt, water and egg, characterized in that the thermally coagulated egg is dispersed in a heated ,stirred mixture to form a sauce having a flavor similar to mayonnaise and in that said sauce is in a semisolid state with a fluidity equivalent to mayonnaise.

2. A sauce according to claim 1, characterized in that it is a low-caloric sauce free of milk or oil.

3. A process for preparing a sauce according to the claim 1 or 2.

4. The method according to claim 3, characterized in that said vinegar comprises synthetic vinegar, brewed vinegar, or mixture thereof.

5. The method according to claim 4, characterized in that said brewed vinegar comprises grain vinegar.

6. The method according to claim 3, characterized in that lemon juice and/or citric acid is (are) used complementarily with vinegar selected from the group consisting of rice vinegar, malt vinegar, or sake lees vinegar, and fruit vinegar.

7. The method according to claim 3, characterized in that said condiment comprises mustard, white pepper, or paprika powder.

8. The method according to claim 3, characterized in that said heating is carried out to a temperature of 90°C to 100°C.

9. The method according to claim 3, characterized in that said stirring is continued till sauce having the creaminess and showing flavor like mayonnaise sauce is obtained.

## Patentansprüche

1. Mayonnaiseartige Sauce, die mit aus Essig, Würzmittel, Salz, Wasser und Ei bestehenden Zutaten zubereitet ist, dadurch gekennzeichnet, daß das thermisch koagulierte Ei in einer erwärmten, gerührten Mischung fein verteilt wird, um eine Sauce mit einem Geschmack ähnlich wie Mayonnaise zu bilden, und dadurch, daß sich die Sauce in einem halbfesten Zustand mit einer Fließfähigkeit befindet, die gleich der von Mayonnaise ist.

2. Sauce nach Anspruch 1, dadurch gekennzeichnet, daß es sich um eine kalorienarme Sauce ohne Milch oder Öl handelt.

3. Verfahren zum Zubereiten einer Sauce nach Anspruch 1 oder 2.

4. Verfahren nach Anspruch 3, dadurch gekennzeichnet, daß der Essig synthetischen Essig, gebrauten Essig oder eine Mischung daraus beinhaltet.

5. Verfahren nach Anspruch 4, dadurch gekennzeichnet, daß der gebraute Essig Getreideessig enthält.

6. Verfahren nach Anspruch 3, dadurch gekennzeichnet, daß Zitronensaft und/oder Zitronensäure ergänzend zu Essig verwendet wird (werden), der aus der Gruppe ausgewählt ist, die aus Reisessig, Malzessig, Reisweinhefeessig und Fruchtessig besteht.

7. Verfahren nach Anspruch 3, dadurch gekennzeichnet, daß das Würzmittel Senf, weißen Pfeffer oder Paprikapulver umfaßt.

8. Verfahren nach Anspruch 3, dadurch gekennzeichnet, daß die Erwärmung bei einer Temperatur von 90 °C bis 100 °C ausgeführt wird.

9. Verfahren nach Anspruch 3, dadurch gekennzeichnet, daß das Rühren fortgesetzt wird, bis eine Sauce erhalten wird, die die Sahnigkeit und einen Geschmack wie Mayonnaisesauce aufweist.

## Revendications

1. Sauce de type mayonnaise préparée avec des ingrédients consistant en du vinaigre, des condiments, du sel, de l'eau et des oeufs caractérisée en ce que l'oeuf coagulé par la chaleur est dispersé dans une mixture agitée pour former une sauce ayant une saveur similaire à celle de la mayonnaise et en ce que la sauce est en un état semi solide avec une consistance équivalente à celle de la mayonnaise.

2. Sauce selon la revendication 1, caractérisée en ce qu'elle est une sauce basse calorie ne contenant ni lait ni huile.

3. Procédé de préparation d'une sauce selon l'une des revendications 1 ou 2.

4. Procédé selon la revendication 3, caractérisé en ce que le vinaigre est constitué par du vinaigre synthétique, du vinaigre brassé ou un mélange des deux vinaigres.

5. Procédé selon la revendication 4, caractérisé en ce que le vinaigre brassé comprend le vinaigre de blé.

6. Procédé selon la revendication 3, caractérisé en ce que du jus de citron et/ou de l'acide citrique est (sont) utilisés en complément du vinaigre sélectionné dans la classe regroupant le vinaigre de riz, le vinaigre de malt, le vinaigre de lie de saké, et le vinaigre de fruit.

7. Procédé selon la revendication 3, caractérisé en ce que les condiments comprennent la moutarde, le poivre blanc ou la poudre de paprika.

8. Procédé selon la revendication 3, caractérisé en ce que le chauffage est effectué à une température de 90 à 100°C.

9. Procédé selon la revendication 3, caractérisé en ce que l'agitation est poursuivie jusqu'à ce que la sauce ait une onctuosité et une odeur analogues a celle d'une sauce mayonnaise.
